# EUROPÄISCHE PATENTSCHRIFT

(11) **EP 2 217 733 B1**
(45) Veröffentlichungstag und Bekanntmachung des Hinweises auf die Patenterteilung: **02.11.2016**
(21) Anmeldenummer: 08849329.1
(22) Anmeldetag: 13.11.2008
(51) Int. Cl.: C21D 1/09, B23P 15/10, F16J 9/22, C21D 9/00

(54) **VERFAHREN ZUM HÄRTEN VON NUTFLANKEN DER RINGNUT EINES STAHLKOLBENS MITTELS EINES LASERSTRAHLES**
PROCESS FOR HARDENING GROOVE FLANKS OF THE ANNULAR GROOVE OF A STEEL PISTON BY MEANS OF A LASER BEAM
PROCÉDÉ POUR FAIRE DURCIR LES FLANCS DE LA GORGE CIRCULAIRE D'UN PISTON EN ACIER PAR UN FAISCEAU LASER

(30) Priorität: 16.11.2007 DE 102007054736
(43) Veröffentlichungstag der Anmeldung: 18.08.2010
(73) Patentinhaber: MAHLE International GmbH, 70376 Stuttgart (DE)
(72) Erfinder: FEDYNA, Achim, 73441 Bopfingen (DE); PESCHKE, Christian, 70437 Stuttgart (DE)
(74) Vertreter: Stumkat, Ulrich
(86) Internationale Anmeldenummer: PCT/DE2008/001869
(87) Internationale Veröffentlichungsnummer: WO 2009/062486

(56) Entgegenhaltungen:
- EP-A- 1 173 624
- WO-A-2007/140826
- DE-A1- 4 434 591
- DE-C1- 19 508 584
- JP-A- 2 104 612
- US-A- 5 515 770

## Beschreibung

Die Erfindung betrifft ein Verfahren zum Härten von Nutflanken der Ringnut eines Stahlkolbens nach dem Oberbegriff des Anspruches 1.

Aus der Offenlegungsschrift, DE 103 37 962 A1, ist ein Verfahren zum Laserhärten von Nutflanken der Ringnuten eines Stahlkolbens bekannt, bei dem, um einen zum Härten geeigneten Absorptionsgrad der Laserstrahlenergie zu erreichen, ein Laserstrahl mit einer Wellenlänge von weniger als 5 µm verwendet wird, der zudem unter einem ausreichend großen Einfallswinkel auf die zu härtende Nut gerichtet werden muss. Nachteilig ist hierbei, dass die Auswahl der Laserquellen, die Laserstrahlung mit einer Wellenlänge von weniger als 5 µm erzeugen, gering ist. Zudem wird die Wahl eines ausreichend großen Einfallswinkels je nach Stellung der Laserquelle gegenüber dem Stahlkolben durch die Geometrie der Ringnut, d.h., durch die der zu härtenden Nutflanke gegenüber liegende Nutflanke begrenzt.

EP 1173624 A offenbart ein weiteres Verfahren zum Laserhärten von Kolbenringnuten, bei dem der Laserstrahl nahezu in Umfangsrichtung einfällt. Durch den kleinen Auftreffwinkel wird der Strahl an der zu härtenden Nutfläche fast tangential reflektiert, wodurch ein anschließendes Auftreffen auf andere Nutflächen und deren unerwünschte Erhitzung vermieden wird. Da die Nutoberfläche den Strahl größtenteils reflektiert, sind jedoch ein hoher Energieeinsatz und eine lange Bearbeitungszeit zum Härten erforderlich.

DE 4434591 A1 offenbart ein Verfahren zum Laserhärten von Eisenwerkstoffen, bei dem der Laserstrahl das Werkstück erwärmt, so dass sich an der bestrahlten Stelle unter Zufuhr eines sauerstoffhaltigen Gases eine die Strahlung gut absorbierende Oxidschicht bildet. Die durch absorbierte Laserstrahlung freigesetzte Wärme erhitzt das Werkstück zum Zweck des Härtens. Die Betriebsparameter des Lasers und die Vorschubgeschwindigkeit werden anhand der Wärmeleitungseigenschaften des Werkstücks im Voraus berechnet.

JP 2104612 A beschreibt ein Verfahren zur Laserbearbeitung von Kolbenringnuten, bei dem zuvor ein Strahlung absorbierender, den Nutgrund bedeckender flacher Ring in die Ringnut eingelegt wird. Dieser schützt den Nutgrund vor unerwünschter Erhitzung durch Strahlungseinfall während einer anschließenden Laserbearbeitung der Nutflanken.

Die nachveröffentlichte WO 2007/140826 A1 offenbart ein Verfahren zum Härten von Kolbenringnuten mittels Laserstrahl, wobei die zu härtende Nutoberfläche mit einer Laserstrahlen absorbierenden Beschichtung versehen wird. Dies geschieht entweder vor dem Härten durch Auftragen einer Mangan-Phosphat-Beschichtung oder während des Härtens durch eine gleichzeitige Oxidation an der Oberfläche unter Einwirkung eines Prozessgases aus Sauerstoff und einem Inertgas.

Es ist Aufgabe der Erfindung, ein effizienteres Verfahren zum Laserhärten der Nutflanken von Kolbenringnuten zu schaffen und die Nachteile des Standes der Technik zu vermeiden. Gelöst wird diese Aufgabe durch ein Verfahren mit den Merkmalen des Anspruchs 1. Zweckmäßige Ausgestaltungen der Erfindung sind Gegenstand der Unteransprüche.

Dadurch, dass gemäß der Erfindung die zu härtende Nutflankenfläche des Stahlkolbens zunächst mittels Eisenoxid eingefärbt wird, erhöht sich deren Wärmeeinkopplungsgrad so weit und reduziert sich zudem deren Reflektivität so sehr, dass das Laserlicht unabhängig von dessen Wellenlänge unter einem beliebigen Einfallswinkel auf die zu härtende Nutflankenfläche gestrahlt werden kann. In einem anschließenden Schritt kann die so beschichtete Nutflanke durch den Laserstrahl mit hoher Effizienz spurweise erhitzt und gehärtet werden.

Ein Ausführungsbeispiel der Erfindung wird im Folgenden anhand der Zeichnungen beschrieben. Es zeigen
- Fig. 1: eine Einrichtung zum Laserhärten der Flanke einer Nut für einen Kolbenring und
- Fig. 2: eine vergrößerte Darstellung der Kolbenringnut, deren untere Flanke mittels eines Lasers gehärtet wird.

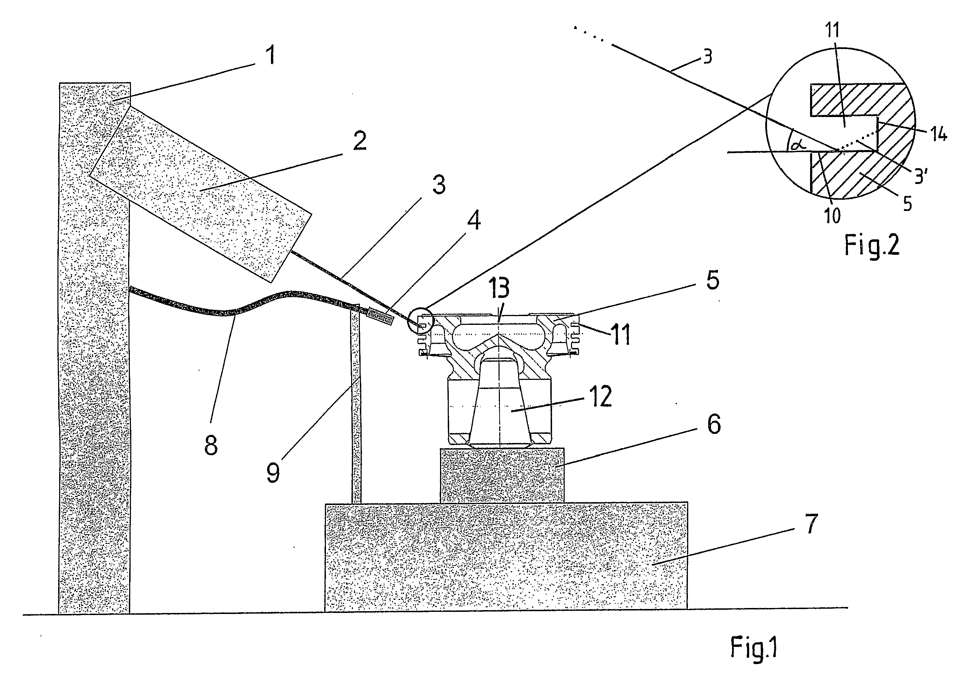

Fig. 1 zeigt eine an einer Haltevorrichtung 1 befestigte Laserquelle 2, die, wie in Fig. 2 vergrößert dargestellt ist, einen Laserstrahl 3 auf die untere Flanke 10 der oberen Ringnut 11 eines Kolbens 5 aus Stahl für einen Verbrennungsmotor richtet, wobei die Ringnut 11 für einen in den Figuren nicht dargestellten Kompressionsring vorgesehen ist. Der Stahlkolben 5 ist über eine Klemmhalterung 12 auf einem Drehteller 6 um seine Kolbenachse 13 drehbar gelagert, wobei der Drehteller 6 auf einem Fundament 7 mit einer in der Figur nicht dargestellten, elektrischen Antriebvorrichtung befestigt ist, von der der Drehteller elektrisch gesteuert in Drehung versetzt wird.

Weiterhin ist an der Haltevorrichtung 1 und an einem Stativ 9 eine Gasleitung 8 befestigt, von der über eine Gasdüse 4 Prozessgas in Richtung der oberen Ringnut 11 geleitet wird, das insbesondere den Bereich der unteren Flanke 10, der lasergehärtet werden soll, mit dem Prozessgas umgibt.

Als Laserquelle 2 kann beispielsweise ein Diodenlaser oder ein Nd:YAG-Laser verwendet werden. Hiermit wird im vorliegenden Ausführungsbeispiel der Erfindung die untere Flanke 10 der Ringnut 11 für den Kompressionsring gehärtet, weil diese Flanke im Motorbetrieb durch den Kompressionsring einer erhöhten Belastung ausgesetzt ist. Auf die erfindungsgemäße Weise kann aber jede mechanisch hochbelastete Fläche des Kolbens 5 gehärtet werden.

Hierbei wird von dem kleinen Brennfleck des Laserstrahls 3 die untere Fläche 10 der Ringnut 11 des mittels des Drehtellers 6 in Drehung versetzten Kolbens 5 spurweise erhitzt. Ein Kühlmedium, um das für den Härteprozess erforderliche Abkühlen der erhitzten Spur zu bewirken, ist hierbei nicht erforderlich, da sich ein sehr schneller Temperaturausgleich zwischen der erhitzten Spur und dem angrenzenden Kolbenmaterial, Stahl, ergibt, der eine Selbstabschreckung mit sich bringt, die ein gutes Aushärten der unteren Nutflanke 10 verursacht.

Während dieses Härteprozesses wird über die Gasdüse 4 das Prozessgas auf die untere Nutflanke 10 geleitet, das aus einer Mischung aus Argon und Sauerstoff, aus Stickstoff und Sauerstoff oder aus Argon, Stickstoff und Sauerstoff bestehen kann. Im Rahmen umfangreicher Versuche wurden gute Ergebnisse mit einer aus 1 % Sauerstoff und 99 % Stickstoff bestehenden Prozessgasmischung erzielt.

Das Prozessgas bewirkt hierbei, dass sich die vom Laserstrahl 3 getroffene Nutflankenfläche aufgrund einer Oxidbildung einfärbt, wobei sich Eisenoxid (Fe₂O₃) bildet. Hierdurch ergibt sich zum einen eine Verbesserung des Wärmeeinkopplungsgrades der per Laser bestrahlten Fläche, wodurch das Erhitzen dieser Fläche beschleunigt und damit der Wirkungsgrad des Lasers verbessert wird. Zum anderen reduziert die Einfärbung der Nutflankenfläche mittels Eisenoxid die Reflektivität dieser Fläche, wodurch die Stärke des von der Nutflanke 10 reflektierten und in Fig. 2 gepunktet gezeichneten Laserstrahles 3' insoweit verringert wird, dass der hiervon getroffene Nutgrund 14 nicht mehr ausreichend erhitzt wird, um gehärtet zu werden. Den Nutgrund 14 beziehungsweise die Kante zwischen Nutflanke 10 und Nutgrund 14 zu härten, ist unerwünscht, weil ein Härten dieser Bereiche die Grundzähigkeit des Kolbenmaterials in diesen Bereichen insoweit reduziert, dass sich im Motorbetrieb hier Risse bilden können.

Das erfindungsgemäße Verfahren, die Nutflanke 10 zu härten, hat den weiteren Vorteil, dass der von der Nutflanke 10 und dem Laserstrahl 3 gebildete Einfallswinkel α beliebig wählbar ist und so gewählt wird, dass die Größe der Härteeindringzone für ein bestmögliches Härteergebnis optimal eingestellt wird.

### Bezugszeichenliste

- α: Einfallswinkel
- 1: Haltvorrichtung
- 2: Laserquelle
- 3, 3': Laserstrahl
- 4: Gasdüse
- 5: Kolben, Stahlkolben
- 6: Drehteller
- 7: Fundament
- 8: Gasleitung
- 9: Stativ
- 10: untere Flanke, Nutflanke
- 11: obere Ringnut
- 12: Klemmhalterung
- 13: Kolbenachse
- 14: Nutgrund

## Patentansprüche

1. Verfahren zum Härten von Nutflanken der Ringnut (11) eines um seine Kolbenachse (13) drehbar gelagerten Stahlkolbens (5) mittels eines Laserstrahles (3), wobei der Laserstrahl (3) auf eine Nutflanke (10) gerichtet und der Stahlkolben (5) um seine Kolbenachse (13) in Drehung versetzt werden,
**gekennzeichnet durch** folgende Verfahrensschritte:
- Leiten von sauerstoffhaltigem Prozessgas auf die Nutflanke (10) des Stahlkolbens (5),
- Versetzen des Stahlkolbens (5) in Drehung,
- Bestrahlen der vom Prozessgas umgebenen Nutflanke (10) mit dem Laserstrahl (3), bis sich auf der Nutflanke (10) eine Eisenoxidschicht gebildet hat,
- Abschalten der Zuführung des Prozessgases,
- spurweises Erhitzen und Härten der Nutflanke (10) mit dem unter einem Winkel α < 90° auf die Nutflanke (10) auftreffenden Laserstrahl (3).

2. Verfahren nach Anspruch 1, **dadurch gekennzeichnet, dass** als Prozessgas eine Mischung aus Argon und Sauerstoff verwendet wird.

3. Verfahren nach Anspruch 1, **dadurch gekennzeichnet, dass** als Prozessgas eine Mischung aus Stickstoff und Sauerstoff verwendet wird.

4. Verfahren nach Anspruch 1, **dadurch gekennzeichnet, dass** als Prozessgas eine Mischung aus Stickstoff, Argon und Sauerstoff verwendet wird.

5. Verfahren nach einem der Ansprüche 1 bis 4, **dadurch gekennzeichnet, dass** dem Prozessgas zumindest näherungsweise 1 % Sauerstoff zugemischt wird.

## Claims

1. A process for hardening the groove sides of the ring groove (11) of a steel piston (5) mounted on bearings so that it can be rotated about its piston axis (13), this hardening being done by means of a laser beam (3) that is directed onto a groove side (10) and the steel piston (5) being set into rotation about its piston axis (13),
**characterized by** the following process steps:
- guiding an oxygen-containing process gas onto the groove side (10) of the steel piston (5);
- setting the steel piston (5) into rotation;
- using the laser beam (3) to irradiate the groove side (10) surrounded by the process gas until an iron oxide layer has formed on the groove side (10);
- turning off the supply of the process gas;
- trackwise heating and hardening the groove side (10) with the laser beam (3) impinging on the groove side (10) at an angle α < 90°.

2. The process according to claim 1, **characterized in that** a mixture of argon and oxygen is used as the process gas.

3. The process according to claim 1, **characterized in that** a mixture of nitrogen and oxygen is used as the process gas.

4. The process according to claim 1, **characterized in that** a mixture of nitrogen, argon, and oxygen is used as the process gas.

5. The process according to one of claims 1 through 4, **characterized in that** at least approximately 1% oxygen is mixed with the process gas.

## Revendications

1. Procédé pour faire durcir des flancs de gorge de la gorge circulaire (11) d'un piston en acier (5), logé en pouvant être mis en rotation autour de son axe de piston (13), au moyen d'un faisceau laser (3), où le faisceau laser (3) est orienté sur un flanc de gorge (10) et le piston en acier (5) est mis en rotation autour de son axe de piston (13),
**caractérisé par** les étapes de procédé suivantes :
- acheminent de gaz de procédé contenant de l'oxygène sur le flanc de gorge (10) du piston en acier (5),
- mise en rotation du piston en acier (5),
- exposition du flanc de gorge (10) entouré du gaz de procédé au faisceau laser (3) jusqu'à ce qu'il se forme une couche d'oxyde de fer sur le flanc de gorge (10),
- arrêt de l'alimentation en gaz de procédé,
- chauffage et durcissement par bandes du flanc de gorge (10) avec le faisceau laser (3) tombant avec un angle α < 90 ° sur le flanc de gorge (10).

2. Procédé selon la revendication 1, **caractérisé en ce qu'**en tant que gaz de procédé on utilise un mélange d'argon et d'oxygène.

3. Procédé selon la revendication 1, **caractérisé en ce qu'**en tant que gaz de procédé on utilise un mélange d'azote et d'oxygène.

4. Procédé selon la revendication 1, **caractérisé en ce qu'**en tant que gaz de procédé on utilise un mélange d'azote, d'argon et d'oxygène.

5. Procédé selon l'une des revendications 1 à 4, **caractérisé en ce qu'**au moins approximativement 1 % d'oxygène est ajouté au gaz de procédé.
